# DEMANDE DE BREVET EUROPEEN

(11) **EP 2 187 261 A1**
(43) Date de publication de la demande: **19.05.2010**
(21) Numéro de dépôt: 09306100.0
(22) Date de dépôt: 16.11.2009
(51) Int. Cl.: G03B 23/08

(54) **Boîtier de projection d'image couplable à un organe d'éclairage et dispositif correspondant**

(30) Priorité: 17.11.2008 FR 0806408
(71) Demandeur: Burlot, M. Matthieu, 75020 Paris (FR); Mugg, François, 44190 Clisson (FR); Quellien, Jean-Pierre, 85610 Cugand (FR)
(72) Inventeur: Burlot, M. Matthieu, 75020 Paris (FR); Mugg, François, 44190 Clisson (FR); Quellien, Jean-Pierre, 85610 Cugand (FR)
(74) Mandataire: Laget, Jean-Loup

(57) **Abrégé**

L'invention concerne un boîtier (100) de projection d'image couplable à un organe d'éclairage (1), ledit organe d'éclairage (1) comportant une source lumineuse entourée d'un réflecteur (11) pourvu d'une collerette externe (12), le corps dudit boîtier (100) présentant une ouverture de sortie de lumière fermée par une lentille optique (8) pour la projection à travers la lentille optique (8) de l'image d'un élément (9), tel qu'une diapositive, apte à être logé à l'intérieur du boîtier (100) entre l'organe d'éclairage (1) et la lentille optique (8).

Selon l'invention, ledit boîtier (100) présente une bouche (23) d'entrée de lumière obturable par ledit organe d'éclairage (1), et ledit boîtier (100) présente des moyens de fixation (3, 4) aptes à permettre la fixation dudit réflecteur (11) au boîtier (100) par la collerette (12) dudit réflecteur (11).

## Description

La présente invention concerne de manière générale les dispositifs de projection d'image.

L'invention concerne plus particulièrement un boîtier de projection d'image couplable à un organe d'éclairage. Le corps dudit boîtier présente une ouverture, dite de sortie de lumière, fermée par une lentille optique pour la projection à travers la lentille optique de l'image d'un élément, tel qu'une diapositive, apte à être logé à l'intérieur du boîtier entre l'organe d'éclairage et la lentille optique. L'invention concerne également un dispositif de projection d'image comprenant un organe d'éclairage et un tel boîtier auquel est fixé l'organe d'éclairage.

On connaît de l'état de la technique, et notamment du document US-3.018.575, des dispositifs tels que décrits ci-dessus. Cependant, dans de tels dispositifs, l'organe d'éclairage est le plus souvent fixé au boîtier par le culot de l'organe d'éclairage à l'aide d'un système de fixation complexe situé au niveau d'une partie de fond du boîtier, formant capot, opposée à l'ouverture de sortie de lumière. Il en résulte que le montage de l'organe d'éclairage dans le boîtier est compliqué à réaliser. La fixation de l'organe d'éclairage par son culot au fond du boîtier rend également difficile la séparation du boîtier par rapport à l'organe d'éclairage puisque celui-ci est difficile d'accès. En effet, le culot de la lampe doit être détaché de son support ou base d'alimentation électrique pour pouvoir retirer le boîtier par rapport à l'organe d'éclairage ou inversement pour pouvoir fixer l'organe d'éclairage au boîtier.

En outre, de tels dispositifs présentent généralement un encombrement important, notamment du fait de la fixation de l'organe d'éclairage par son culot au niveau du fond du boîtier. Il arrive également que l'organe d'éclairage utilisé dégage une quantité de chaleur importante et qu'il soit nécessaire de prévoir un ventilateur dans le boîtier, ce qui augmente encore l'encombrement du dispositif de projection.

La présente invention a pour but de proposer un boîtier de projection d'image pour lequel la fixation dudit boîtier à un organe d'éclairage équipé d'un réflecteur muni d'une collerette est rapide, aisée et fiable, de même que la séparation dudit boîtier par rapport à l'organe d'éclairage.

Un autre but de l'invention est de proposer un boîtier de projection d'image aisément raccordable à un organe d'éclairage déjà connecté par son culot à un support, tel que pied de luminaire, pour son alimentation électrique, sans avoir à défaire l'organe d'éclairage dudit support.

A cet effet, l'invention a pour objet un boîtier de projection d'image couplable à un organe d'éclairage, ledit organe d'éclairage comportant une source lumineuse entourée d'un réflecteur pourvu d'une collerette externe,
le corps dudit boîtier présentant une ouverture dite de sortie de lumière fermée par une lentille optique pour la projection à travers la lentille optique de l'image d'un élément, tel qu'une diapositive, apte à être logé à l'intérieur du boîtier entre l'organe d'éclairage et la lentille optique,
**caractérisé en ce que** ledit boîtier présente une bouche d'entrée de lumière obturable par ledit organe d'éclairage,
et en ce que ledit boîtier présente des moyens de fixation aptes à permettre la fixation dudit réflecteur au boîtier par la collerette dudit réflecteur.

Grâce aux moyens de fixation de la collerette du réflecteur au boîtier, la fixation de l'organe d'éclairage s'effectue de manière fiable par emprisonnement de sa collerette dans le boîtier. La collerette du réflecteur sert ainsi d'élément de prise pour la fixation de l'organe d'éclairage au boîtier.

Une telle fixation de l'organe d'éclairage au boîtier par la collerette du réflecteur est aisée à mettre en oeuvre. En effet, pour fixer l'organe d'éclairage au boîtier, l'opérateur peut amener la bouche d'entrée de lumière du boîtier au niveau de la collerette du réflecteur pour faire coopérer la collerette avec les moyens de fixation correspondant du boîtier afin d'assurer la fixation de l'organe d'éclairage au boîtier par sa collerette.

Une telle fixation de l'organe d'éclairage par sa collerette au niveau de la bouche d'entrée de lumière du boîtier permet de limiter l'encombrement du dispositif.

Le culot de l'organe de verrouillage reste en saillie de la bouche du boîtier obturée par l'organe d'éclairage fixé par sa collerette au boîtier, ce qui permet de réduire l'encombrement du dispositif par rapport aux dispositifs connus de l'état de la technique pour lesquels l'organe d'éclairage est fixé par son culot à un fond de boîtier opposé à l'ouverture de sortie de lumière. Dans le boîtier selon l'invention, ledit boîtier présente une bouche d'entrée de lumière obturée par l'organe d'éclairage et est dépourvu de paroi de fond, de type capot, qui viendrait fermer le boîtier au niveau du culot de l'organe d'éclairage.

Ledit boîtier selon l'invention peut alors être fixé aisément à un organe d'éclairage raccordé par son culot à un support, tel qu'une base de luminaire, ce qui permet d'intégrer le boîtier de projection d'image à un luminaire pour la projection d'image sur une surface telle que mur, plafond ou sol d'une pièce.

Grâce à une telle fixation de l'organe d'éclairage au boîtier par sa collerette, il est possible de concevoir des boîtiers pour lesquels le montage du boîtier sur l'organe d'éclairage, ainsi que le démontage du boîtier par rapport à l'organe d'éclairage, s'effectue sans avoir à défaire l'organe d'éclairage du support auquel ledit organe d'éclairage est raccordé par son culot pour son alimentation électrique.

L'invention s'applique de manière particulièrement avantageuse aux organes d'éclairage appelés SPOTLED ou SPOT LED qui sont standardisés en étant formé d'une source lumineuse comprenant au moins une diode électroluminescente ou LED, entourée d'un réflecteur pourvu d'une collerette externe.

L'utilisation d'un organe d'éclairage dont la source lumineuse est formée d'au moins une diode électroluminescente ou LED, permet de limiter la consommation électrique du dispositif. En outre, une telle source lumineuse à LED dégage peu de chaleur, ce qui permet de se passer de ventilateur à l'intérieur du boîtier et donc de réduire l'encombrement du boîtier.

Selon une caractéristique avantageuse de l'invention, lesdits moyens de fixation de l'organe d'éclairage au boîtier comprennent une gorge annulaire ménagée à l'intérieur de ladite bouche et apte à recevoir la collerette du réflecteur, ladite gorge présentant au moins un flanc dit avant qui fait office de butée axiale de limitation d'insertion de l'organe d'éclairage dans le boîtier.

Selon une caractéristique avantageuse de l'invention, ladite gorge annulaire formant logement de réception de la collerette du réflecteur est ouverte du côté de l'embouchure de la bouche du boîtier.

Autrement dit, la gorge ménagée dans la face interne de la paroi de la bouche du boîtier comprend un seul flanc qui permet de prédéfinir la position axiale d'insertion de l'organe d'éclairage. La gorge est alors dépourvue de flanc côté extrémité d'insertion de l'organe d'éclairage, ce qui facilite l'introduction de l'organe d'éclairage, et en en particulier de sa collerette, dans la bouche du boîtier. En outre, dès l'introduction de l'organe d'éclairage dans la bouche du boîtier, celui est maintenu radialement dans le boîtier par le fond de gorge qui entoure, en particulier, la circonférence de ladite collerette.

Selon une caractéristique avantageuse de l'invention, la paroi de délimitation de la bouche est élastiquement déformable pour permettre à la gorge annulaire d'enserrer la collerette du réflecteur.

Selon une caractéristique avantageuse de l'invention, l'embouchure de la bouche est formée de languettes axiales élastiquement déformables s'étendant au moins jusqu'audit flanc avant de la gorge. Préférentiellement, les languettes se prolongent axialement au-delà du fond de la gorge au niveau dudit flanc de gorge.

Selon un mode de réalisation préféré de l'invention, la bouche est délimitée par une paroi tubulaire du corps de boîtier, au moins une partie de ladite paroi tubulaire présentant sur sa face externe une protubérance formant rampe, la gorge annulaire étant ménagée au droit de la rampe,
et ledit boîtier comprend une bague de serrage, enfilée sur le corps du boîtier, ladite bague de serrage étant apte à être déplacée le long du corps du boîtier entre une position, dite de libération de la collerette du réflecteur, dans laquelle elle est écartée de ladite rampe, et une position, dite de maintien de la collerette, dans laquelle elle appuie sur ladite rampe de telle sorte que, à l'état introduit de la collerette du réflecteur dans la gorge, le fond de gorge annulaire enserre la collerette par constriction de la bouche.

Selon un autre mode de réalisation de l'invention, le corps du boîtier comprenant au moins deux bagues dont l'une, dite bague de projection, est située entre l'autre bague, dite bague de fixation, et la lentille,
et la collerette présentant un flanc annulaire avant orienté du côté de l'embouchure du réflecteur et un flanc annulaire arrière orienté du côté du réflecteur opposé à son embouchure,
la bouche du boîtier et la gorge de réception de la collerette sont formées par assemblage desdites bagues de fixation et de projection qui délimitent entre elles ladite gorge annulaire, ladite gorge annulaire présentant une surface de fond destinée à entourer la circonférence de la collerette et deux flancs formés l'un par une partie de la bague de fixation, l'autre par une partie de la bague de projection.

Selon une caractéristique avantageuse de l'invention, lesdits moyens de fixation sont des moyens de fixation par encliquetage de la collerette, formant partie mâle, dans une partie femelle du boîtier.

Selon une caractéristique avantageuse de l'invention, ledit boîtier étant formé d'au moins deux éléments tubulaires montés à emboitement télescopique, ladite bouche est formée par la portion d'extrémité libre de la paroi tubulaire d'un des éléments tubulaires, l'autre élément tubulaire étant équipé à son extrémité libre de ladite lentille.

L'invention concerne également un dispositif de projection d'image comprenant un organe d'éclairage comportant une source lumineuse entourée d'un réflecteur pourvu d'une collerette externe et un boîtier couplable audit organe d'éclairage, **caractérisé en ce que** ledit boîtier est tel que décrit ci-dessus, ledit organe d'éclairage étant fixé au boîtier par la collerette de son réflecteur. Comme rappelé ci-dessus, ladite source lumineuse de l'organe d'éclairage comprend de préférence au moins une diode électroluminescente.

L'invention sera bien comprise à la lecture de la description suivante d'exemples de réalisation, en référence aux dessins annexés dans lesquels :
- la figure 1 est une vue de côté du dispositif de projection d'image selon un mode de réalisation préféré de l'invention ;
- la figure 2 est une vue en perspective d'un manchon tubulaire du boîtier de la figure 1, dont une portion d'extrémité délimite la bouche d'entrée de lumière dudit boîtier;
- la figure 3 est une vue en coupe axiale du boîtier de la figure 1 à l'état non monté de l'organe d'éclairage;
- la figure 4 est une vue du boîtier de la figure 3 à l'état introduit de la collerette de l'organe d'éclairage dans la gorge annulaire ménagée dans la bouche du boîtier;
- la figure 5 est une vue du boîtier de la figure 4 à l'état serré de la bouche autour de la collerette à l'aide d'une bague de serrage;
- la figure 6 est une vue en coupe axiale du boîtier selon un autre mode de réalisation, à l'état fixé de l'organe d'éclairage au boîtier par sa collerette.

En référence aux figures et comme rappelé ci-dessus, l'invention concerne un boîtier 100 de projection d'image couplable à un organe d'éclairage 1. Ledit organe d'éclairage 1 comporte une source lumineuse entourée d'un réflecteur 11 pourvu d'une collerette externe 12. La collerette 12 présente un flanc annulaire avant orienté du côté de l'embouchure 110 du réflecteur et un flanc annulaire arrière orienté du côté du réflecteur 11 opposé à son embouchure 110. Préférentiellement, ladite source lumineuse de l'organe d'éclairage 1 comprend au moins une diode électroluminescente ou LED.

Le corps dudit boîtier 100 présente une bouche 23 d'entrée de lumière obturable par ledit organe d'éclairage 1, et une ouverture dite de sortie de lumière. Ladite ouverture de sortie de lumière est fermée par une lentille optique 8 pour la projection à travers la lentille optique 8 de l'image d'un élément 9 servant de support d'image, tel qu'une diapositive, apte à être logé à l'intérieur du boîtier 100 entre l'organe d'éclairage 1 et la lentille optique 8. L'organe d'éclairage 1 est destiné à être partiellement introduit dans ledit boîtier par l'embouchure 20A de la bouche 23 du boîtier. L'embouchure 110 du réflecteur de l'organe d'éclairage 1 est alors orientée en direction de la lentille 8.

De manière générale, le corps du boîtier comprend une paroi périphérique, qui s'étend entre la bouche 23 et l'ouverture de sortie de lumière, autour d'un axe dit optique correspondant à l'axe de projection de l'image. Pour l'insertion de l'élément 9, ici une diapositive, le boîtier comprend un logement d'insertion 6 de diapositive formé par une fente transversale ménagée dans la paroi périphérique du boîtier, ici un manchon tubulaire 2 comme détaillé ci-après.

Le réflecteur 11 comporte également une paroi périphérique qui s'étend autour d'un axe optique confondu avec l'axe optique du boîtier à l'état fixé de l'organe d'éclairage au boîtier. Ladite paroi périphérique présente une forme de cuvette ou cloche qui s'évase en direction de la lentille. La face interne de la paroi périphérique du réflecteur est concave et de forme générale parabolique ou elliptique en coupe axiale.

Ledit boîtier 100 présente des moyens de fixation 3, 4 aptes à permettre la fixation dudit réflecteur 11 au boîtier 100 par la collerette 12 dudit réflecteur 11.

Le culot 10 de l'organe d'éclairage 1 reste en saillie de la bouche 23 du boîtier à l'état fixé de l'organe d'éclairage au boîtier.

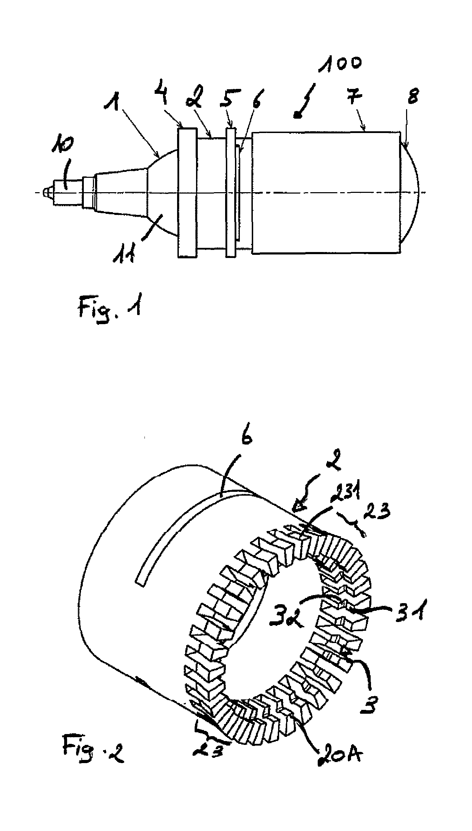

Dans l'exemple illustré aux figures 1 à 5, le corps du boîtier est composé de deux éléments ou manchons tubulaires 2, 7. Préférentiellement lesdits manchons tubulaires sont de section circulaire. Les deux manchons tubulaires 2, 7 sont montés à emboitement télescopique. Ladite bouche 23 est formée par la portion d'extrémité libre de la paroi tubulaire de l'un 2 des manchons tubulaires, l'autre manchon tubulaire 7 étant équipé à son extrémité libre de ladite lentille 8. La distance entre le manchon tubulaire 2 et le manchon tubulaire 7 est réglable par vissage du manchon tubulaire 7 sur le manchon tubulaire 2 de manière à régler la qualité de l'image.

Lesdits moyens de fixation du boîtier 100 pour la fixation de l'organe d'éclairage 1 au boîtier 100 comprennent une gorge annulaire 3, ou logement annulaire, ménagé(e) à l'intérieur de ladite bouche 23 et apte à recevoir la collerette 12 du réflecteur 11. Ladite gorge 3 présente au moins un flanc dit avant formé par un épaulement 32 à l'intérieur du boîtier 100 qui fait office de butée axiale de limitation d'insertion de l'organe d'éclairage 1 dans le boîtier 100. Autrement dit, un logement annulaire est ménagé dans l'épaisseur, côté face interne, de la paroi périphérique du boîtier.

Dans l'exemple illustré aux figures 1 à 5, ladite gorge annulaire 3 formant logement de réception de la collerette 12 du réflecteur 11 est ouverte du côté de l'embouchure 20A de la bouche 23 du boîtier 100.

La gorge 3 est ainsi délimitée par l'épaulement 32 écarté de l'embouchure 20A de la bouche 23, de préférence d'une distance sensiblement égale à la largeur de la collerette, correspondant à la distance prise entre ses flancs, de sorte que la face interne de la bouche 23, qui s'étend entre l'épaulement 32 et l'embouchure 20A, forme le fond de gorge 31 destiné à entourer la circonférence de la collerette 12 du réflecteur 11.

La paroi de délimitation de la bouche 23 est élastiquement déformable, dans le sens d'une constriction de ladite bouche, c'est-à-dire d'une réduction de l'ouverture de passage de la bouche, pour permettre à la gorge annulaire 3 d'enserrer la collerette 12 du réflecteur 11.

Ledit état déformable de la bouche est obtenu par choix d'un matériau élastiquement déformable pour former la bouche et/ou, comme détaillé ci-après, par des encoches ménagées dans la paroi de la bouche pour autoriser sa déformation.

L'embouchure 20A de la bouche 23 est formée de languettes ou dents axiales élastiquement déformables s'étendant au moins jusqu'audit flanc 32 avant de la gorge 3. Les languettes se prolongent axialement au-delà du fond 31 de la gorge 3 au niveau dudit flanc 32 de gorge 3, ce qui permet d'augmenter la capacité de déformation de la paroi de la bouche 23.

Ainsi, les languettes présentent chacune une forme en escalier dont la marche est formée par le fond 31 de gorge et dont la contremarche est formée par le flanc 32 de la gorge formant butée d'introduction de la collerette.

Autrement dit, les languettes sont délimitées par des encoches ménagées dans la bouche 23, depuis le contour de son embouchure, en s'étendant sur une longueur axiale au moins jusqu'audit flanc 32 de la gorge. Dans l'exemple illustré aux figures, les encoches se prolongent axialement au-delà du fond de gorge au niveau dudit flanc 32 de gorge 3. Lesdites encoches sont écartées les unes des autres le long de la circonférence du manchon tubulaire et chaque encoche débouche côté face interne et face externe de la paroi de la bouche du boîtier. Les languettes forment un crénelage au niveau de la bouche 23 du boîtier.

Les espaces entre les languettes permettent non seulement une bonne déformation élastique desdites languettes lors de la fixation de la collerette dans la gorge, mais permettent également de ménager des passages d'air au niveau du boîtier, en particulier lorsque les espaces formés par les encoches se prolongent axialement au-delà du fond de gorge. De tels passages d'air favorisent le refroidissement de l'organe d'éclairage.

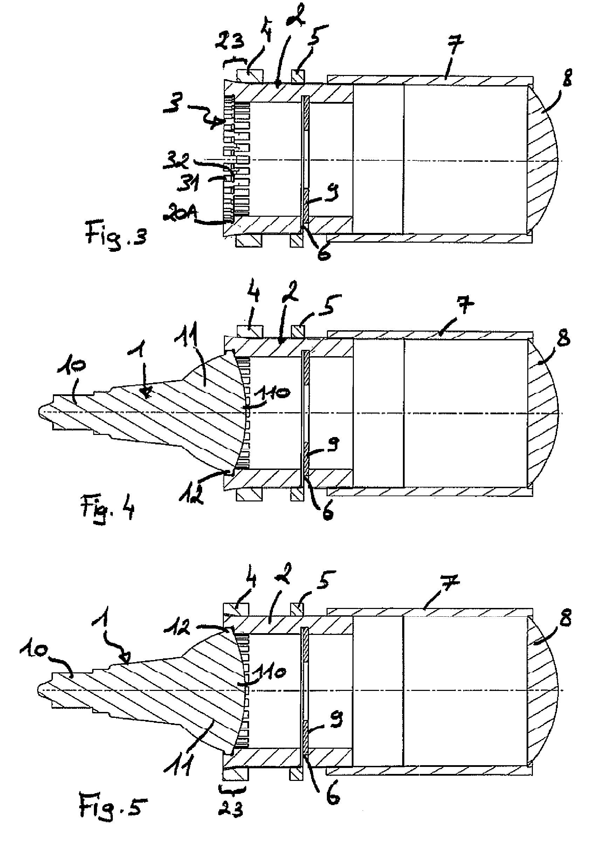

Comme illustré plus particulièrement aux figures 3 à 5, la bouche 23 est délimitée par une paroi tubulaire du corps de boîtier 100 dont au moins une partie présente sur sa face externe une protubérance formant rampe 231. Ledit boîtier 100 comprend également une bague de serrage 4, enfilée sur le corps du boîtier 100.

Ladite bague de serrage 4 est apte à être déplacée par vissage le long du corps du boîtier 100 entre une position, dite de libération de la collerette 12 du réflecteur 11, dans laquelle elle est écartée de ladite rampe 231, en restant enfilée sur le corps de boîtier, et une position, dite de maintien de la collerette 12, dans laquelle elle coiffe au moins partiellement et appuie sur ladite rampe 231 de telle sorte que, à l'état introduit de la collerette 12 du réflecteur 11 dans la gorge 3, le fond 31 de gorge 3 annulaire enserre la collerette 12 par constriction de la bouche 23.

Le fond de la gorge s'étend au droit de la partie de la rampe 231 de sorte que l'appui de la bague de serrage 4 sur la rampe 231 déforme les languettes 31, 32 pour les rapprocher de l'axe du boîtier et ainsi les amener contre la circonférence ou pourtour de la collerette 12.

Ainsi, lesdits moyens de fixation du boîtier selon le mode de réalisation illustré aux figures 1 à 5 sont des moyens de fixation par serrage de la collerette 12 du réflecteur 11 à l'intérieur de la bouche 23 du boîtier.

La bague de serrage 4 est enfilée sur le manchon tubulaire 2 de manière à pouvoir être déplacée par vissage entre la rampe 231 et une butée annulaire 5 fixée autour du corps du boîtier, en particulier autour du manchon tubulaire 2. A cet effet, la bague de serrage 4 comprend côté face interne un taraudage de manière à former un écrou 4. Le manchon tubulaire 2 comprend sur au moins une longueur donnée de sa surface périphérique externe un filetage apte à coopérer avec le taraudage de la bague de serrage pour permettre de déplacer, par vissage/dévissage, ladite bague de serrage entre sa position dite de libération de l'organe d'éclairage par rapport au manchon tubulaire 2 et sa position de maintien de l'organe d'éclairage à l'intérieur dudit manchon tubulaire 2. Ledit filetage s'étend au moins sur une portion rectiligne à proximité de la rampe 231. La butée annulaire 5 est située à affleurement de la fente transversale 6 ménagée dans le corps de boîtier pour l'insertion d'une diapositive 9 et sert ainsi de paroi de guidage pour l'insertion de la diapositive dans son logement à l'intérieur du boîtier.

Ladite bague de serrage 4 présente un diamètre intérieur inférieur au diamètre externe maximal de la rampe 231, ce qui permet à la bague d'appliquer un serrage progressif de la gorge 3 sur la collerette 12 à mesure que la bague est déplacée en appui contre la rampe 231.

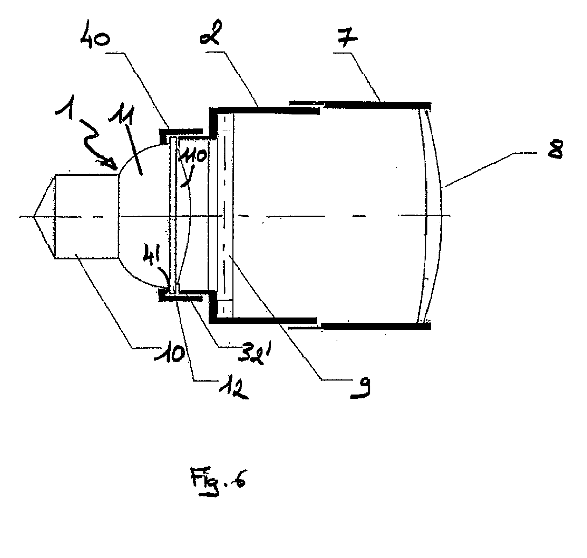

Selon un autre mode de réalisation illustré à la figure 6, la bouche 23 du boîtier 100 et la gorge de réception 3 de la collerette sont formées par assemblage d'une bague 40 de fixation et d'un manchon tubulaire 2 qui délimitent entre eux ladite gorge annulaire 3, côté intérieur de l'assemblage des deux bagues. Le manchon 2 comprend, comme pour le mode de réalisation illustré aux figures 1 à 5, un logement d'insertion 6 d'un élément d'image, tel qu'une diapositive 9, ainsi qu'un manchon de réglage 7 équipé de la lentille 8 et monté à emboitement télescopique sur le manchon 2. Le manchon 2 est interposé entre le manchon de réglage 7 et bague de fixation 40. Ladite bague de fixation 40 est de longueur inférieure à celle de l'organe d'éclairage 1.

La bague de fixation 40 comprend un épaulement 41 côté intérieur de ladite bague 40 de sorte que ledit épaulement forme le flanc arrière de la gorge 3. Ladite gorge annulaire 3 présente une surface de fond destinée à entourer la surface sommet de la collerette et deux flancs 41, 32' formés l'un par une partie 41 de bague de fixation 40, et l'autre par une partie 32' du manchon 2.

Le procédé d'assemblage du dispositif peut être le suivant. On amène le flanc avant de la collerette 12 de l'organe d'éclairage contre la partie de la bague de projection 2 formant flanc avant de la gorge 3. Puis, la bague de fixation 40 est déplacée le long de l'organe d'éclairage 1 jusqu'à une position dans laquelle la bague de fixation 40 est couplée au manchon 2 et dans laquelle la partie 41 de la bague 40 formant flanc arrière de la gorge 3 annulaire vient sensiblement en applique ou à proximité du flanc arrière de la collerette 12 du réflecteur de telle sorte que la collerette est emprisonnée dans la gorge formée par l'assemblage de la bague de fixation 40 et du manchon tubulaire 2.

Plusieurs conceptions du boîtier sont alors envisageables. Selon une conception illustrée à la figure 6, on peut prévoir que le flanc avant 32' de la gorge 3 soit formé par la tranche annulaire de la paroi de l'extrémité du manchon tubulaire 2 destinée à être couplée à la bague de fixation 40. Dans ce cas, la face interne de la bague de fixation 40, qui s'étend entre ledit épaulement 41 et l'extrémité d'assemblage, définit le fond de la gorge 3.

Selon une autre conception du boîtier non illustrée aux figures, on peut prévoir que le flanc avant de la gorge soit formé par un épaulement ménagé à l'intérieur du manchon tubulaire 2 à écartement de l'extrémité du manchon tubulaire du côté de la bague 40 de sorte que la face interne dudit manchon tubulaire 2 qui s'étend entre l'épaulement et ladite extrémité forme le fond de gorge.

Avantageusement, dans chacun des deux modes de conception décrits ci-dessus, la bague de fixation 40 présente un taraudage sur au moins une partie de sa face interne située entre l'épaulement 41 et l'extrémité d'assemblage, pour permettre un assemblage par vissage de bague de fixation 40 par coopération du taraudage de ladite bague de fixation 40 avec un filetage ménagé sur la face externe de la paroi du manchon tubulaire 2.

En variante, on peut prévoir que lesdits moyens de fixation sont des moyens de fixation par encliquetage de la collerette, formant partie mâle, dans un logement ou gorge annulaire, formant partie femelle, du boîtier. En particulier, pour un organe d'éclairage dont la collerette du réflecteur est de dimension standard ou normalisée, les dimensions du logement ou gorge annulaire ménagé dans le boîtier sont adaptées à une insertion de la collerette dans le logement annulaire par encliquetage.

La présente invention n'est nullement limitée aux modes de réalisation décrits et représentés, mais l'homme du métier saura y apporter toute variante conforme à son esprit.

## Revendications

1. Boîtier (100) de projection d'image couplable à un organe d'éclairage (1), ledit organe d'éclairage (1) comportant une source lumineuse entourée d'un réflecteur (11) pourvu d'une collerette externe (12),
le corps dudit boîtier (100) présentant une ouverture dite de sortie de lumière fermée par une lentille optique (8) pour la projection à travers la lentille optique (8) de l'image d'un élément (9), tel qu'une diapositive, apte à être logé à l'intérieur du boîtier (100) entre l'organe d'éclairage (1) et la lentille optique (8), **caractérisé en ce que** ledit boîtier (100) présente une bouche (23) d'entrée de lumière obturable par ledit organe d'éclairage (1),
et **en ce que** ledit boîtier (100) présente des moyens de fixation (3, 4) aptes à permettre la fixation dudit réflecteur (11) au boîtier (100) par la collerette (12) dudit réflecteur (11).

2. Boîtier (100) selon la revendication 1, **caractérisé en ce que** lesdits moyens de fixation de l'organe d'éclairage (1) au boîtier (100) comprennent une gorge annulaire (3) ménagée à l'intérieur de ladite bouche (23) et apte à recevoir la collerette (12) du réflecteur (11),
ladite gorge (3) présentant au moins un flanc dit avant (32) qui fait office de butée axiale de limitation d'insertion de l'organe d'éclairage (1) dans le boîtier (100).

3. Boîtier (100) selon la revendication 2, **caractérisé en ce que** ladite gorge annulaire (3) formant logement de réception de la collerette (12) du réflecteur (11) est ouverte du côté de l'embouchure (20A) de la bouche (23) du boîtier (100).

4. Boîtier (100) selon l'une des revendications 2 et 3, **caractérisé en ce que** la paroi de délimitation de la bouche (23) est élastiquement déformable pour permettre à la gorge annulaire (3) d'enserrer la collerette (12) du réflecteur (11).

5. Boîtier (100) selon la revendication 4, **caractérisé en ce que** l'embouchure (20A) de la bouche (23) est formée de languettes axiales élastiquement déformables s'étendant au moins jusqu'audit flanc (32) avant de la gorge (3).

6. Boîtier (100) selon la revendication 5, **caractérisé en ce que** les languettes se prolongent axialement au-delà du fond (31) de la gorge (3) au niveau dudit flanc (32) de gorge (3).

7. Boîtier (100) selon l'une des revendications 4 à 6, **caractérisé en ce que** la bouche (23) est délimitée par une paroi tubulaire du corps de boîtier (100), au moins une partie de ladite paroi tubulaire présentant sur sa face externe une protubérance formant rampe (231), la gorge annulaire (3) étant ménagée au droit de la rampe (231),
et **en ce que** ledit boîtier (100) comprend une bague de serrage (4), enfilée sur le corps du boîtier (100), ladite bague de serrage (4) étant apte à être déplacée le long du corps du boîtier (100) entre une position, dite de libération de la collerette (12) du réflecteur (11), dans laquelle elle est écartée de ladite rampe (231), et une position, dite de maintien de la collerette (12), dans laquelle elle appuie sur ladite rampe (231) de telle sorte que, à l'état introduit de la collerette (12) du réflecteur (11) dans la gorge (3), le fond (31) de gorge (3) annulaire enserre la collerette (12) par constriction de la bouche (23).

8. Boîtier (100) selon l'une des revendications précédentes, **caractérisé en ce que** ledit boîtier étant formé d'au moins deux éléments tubulaires (2, 7) montés à emboitement télescopique, ladite bouche (23) est formée par la portion d'extrémité libre de la paroi tubulaire d'un (2) des éléments tubulaires, l'autre élément tubulaire (7) étant équipé à son extrémité libre de ladite lentille (8).

9. Dispositif de projection d'image comprenant un organe d'éclairage (1) comportant une source lumineuse entourée d'un réflecteur (11) pourvu d'une collerette externe (12) et un boîtier (100) couplable audit organe d'éclairage (1), **caractérisé en ce que** ledit boîtier (100) est conforme à l'une des revendications précédentes, ledit organe d'éclairage (1) étant fixé au boîtier par la collerette (12) de son réflecteur (11).

10. Dispositif selon la revendication précédente, **caractérisé en ce que** ladite source lumineuse de l'organe d'éclairage (1) comprend au moins une diode électroluminescente.
